# EUROPÄISCHE PATENTANMELDUNG

(11) **EP 2 196 348 A1**
(43) Veröffentlichungstag der Anmeldung: **16.06.2010**
(21) Anmeldenummer: 09174642.0
(22) Anmeldetag: 30.10.2009
(51) Int. Cl.: B60K 26/02, B60K 31/04

(54) **Fahrpedalmodul**

(30) Priorität: 15.12.2008 DE 102008054625
(71) Anmelder: Robert Bosch GmbH, 70442 Stuttgart (DE)
(72) Erfinder: Baur, Axel, 70176 Stuttgart (DE); Linke, Thomas, 71336 Waiblingen (DE)

(57) **Zusammenfassung**

Die Erfindung betrifft ein Fahrpedalmodul (1) zum Steuern der Motorleistung eines Kraftfahrzeugs, welches ein über einen vorbestimmten Schwenkwinkelbereich schwenkbar an einem Lagerbock (2) gelagertes Pedalelement (3) umfasst, wobei die Motorleistung durch Betätigen des Pedalelements (3) durch einen Fahrer des Kraftfahrzeugs veränderbar ist. Das Fahrpedalmodul (1) weist eine Zusatzfunktion auf, bei welcher das Pedalelement (3) als Fußablage für einen Fuß des Fahrers wirkt.

## Beschreibung

Die Erfindung betrifft ein Fahrpedalmodul gemäß dem Oberbegriff des Anspruchs 1.

### Stand der Technik

"Force Feedback" (Kraft-Rückmeldung) wird im Kraftfahrzeugbereich beispielsweise in Bezug auf das Gaspedal eines Kraftfahrzeugs eingesetzt, wobei es verschiedene Realisierungsansätze gibt. Insbesondere gibt es aktive und passive Prinzipien. Ein aktives Prinzip bewirkt eine Zustandsänderung eines Systems ohne eine zusätzliche Rückkopplung mit dem Fahrer eines Kraftfahrzeugs. Hierbei ändert das System den Zustand aktiv und gibt ihn dem Fahrer vor. Zu den aktiven Prinzipien gehören z. B. eine veränderbare Kraft/Weg-Kennlinie oder eine Rückmeldung über Vibration o.ä. Eine veränderbare Kraft/Weg-Kennlinie kann über einen Absenken und/oder Erhöhen des Kraftniveaus und/oder ein Verändern der Steigung der Kraft/Weg-Kennlinie realisiert werden. Ein passives Prinzip bewirkt dagegen eine Zustandsänderung des Systems in Abhängigkeit des Fahrerwunsches. Es wird dem Fahrer ein geänderter Zustand zur Verfügung gestellt, der jedoch jederzeit vom Fahrer wieder auf den Ursprungszustand geändert werden kann.

Beispiele für passive Prinzipien sind Geschwindigkeitsregelfunktionen (Cruise Control), die beispielsweise mittels eines Tempomats durchgeführt werden, Geschwindkeitsbegrenzungsfunktionen (Speed Limiter), und abstandsabhängige Geschschwindigkeitsregelfunktionen (Adaptive Cruise Control). Da der Fahrer des Kraftfahrzeugs beim Einschalten dieser Fahrzeugfunktionen selbst nicht mehr aktiv das Gaspedal zur Geschwindigkeitsregelung betätigen muss, ist es wünschenswert, dass der Fahrer den Fuß während der automatischen Geschwindigkeitsregelung auf bequeme Art und Weise im Fußraum absetzen kann.

Hierzu offenbart US 4 010 975 eine Fußseitenstütze zum Einbau in den Fußraum von Kraftfahrzeugen. Um dem Fuß Halt zu geben, und um ein vorzeitiges Ermüden wegen verkrampfter Fuß- und Beinhaltung zu vermeiden, wird eine Fußstütze eingesetzt, auf die der Fahrer bei einem Fahrmodus mit automatisch regulierender Geschwindigkeit seinen rechten Fuß absetzen kann, wobei zugleich im Fersenbereich abgestützt wird. Damit die Geschwindigkeitsautomatik nicht aufgehoben wird, was durch Betätigen des Gaspedals oder die Bremse ausgelöst wird, ist die Fußstütze oberhalb des Pedals seitlich neben der Mittelkonsole angeordnet.

Jedoch ist bei dieser aus dem Stand der Technik bekannten Konfiguration der Fuß des Fahrers zum Abschalten der Geschwindigkeitsautomatik beispielsweise durch Erneutes Betätigen des Gaspedals von diesem entfernt angeordnet, was die Reaktionszeit bzw. die Zeit bis zur Betätigung erhöht. Dies ist besonders in Gefahrensituationen von Nachteil und stellt ein erhebliches Sicherheitsrisiko dar.

Es ist daher wünschenswert, dass der Fahrer das Gaspedal bzw. das Fahrpedalmodul direkt beispielsweise bei eingeschalteter Geschwindigkeitsautomatik als Fußablage benutzen kann, um einerseits den Komfort für den Fahrer und andererseits die Sicherheit zu erhöhen.

### Offenbarung der Erfindung

### Vorteile der Erfindung

Das erfindungsgemäße Fahrpedalmodul mit den Merkmalen gemäß dem unabhängigen Anspruch hat den Vorteil, dass es eine Zusatzfunktion "Fußablage" aufweist, bei welcher das Fahrpedalmodul selbst direkt als Fußablage für den Fuß eines Fahrers dient. Durch die Zusatzfunktion "Fußablage" wird dem Fahrer ein erhöhter Komfort geboten, da er den Fuß auf dem Fahrpedalmodul bzw. auf einer an einem Pedalarm vorgesehenen Pedalplatte belassen kann.

Es ist besonders vorteilhaft, wenn die Zusatzfunktion "Fußablage" beim Einschalten einer automatischen Steuerung, insbesondere beim Einschalten einer automatischen Geschwindigkeitsregelung, aktiviert wird. Insbesondere, wenn der Fahrer das Fahrpedalmodul nicht selbst zur Steuerung der Motorleistung oder zum Beschleunigen des Fahrzeugs betätigt, sondern die Motorleistung des Kraftfahrzeugs automatisch mittels eines Geschwindigkeitsregelprogramms gemäß beispielsweise einer Cruise Control Funktion oder dergleichen verändert wird, ist dieser Komfort auch direkt verbunden mit einer erhöhten Sicherheit. In einer Gefahrensituation kann der Fahrer aus einer bekannten Position reagieren, da sich sein Fuß auf dem Pedalelement befindet und nicht irgendwo im Fußraum steht. Unabhängig davon, ob gebremst oder beschleunigt werden muss, sind dies für den Fahrer gewohnte und kurze Wege. Die Reaktionszeit, die z. B. zum Erreichen der Bremse benötigt wird, kann dadurch um ca. 20 ms verkürzt werden.

Gemäß einer bevorzugten Ausführungsform erfolgt die Zusatzfunktion "Fußablage" durch eine abschnittsweise Veränderung der Kraft/Weg-Kennlinie des Fahrpedalmoduls, wobei die Zusatzfunktion "Fußablage" durch Absenken der Pedalkraft bewirkt wird.

Gemäß einer weiteren bevorzugten Ausführungsform wird die Zusatzfunktion durch ein erstes Element, welches einen Betätiger und eine Feder, welche in einem Gehäuse angeordnet sind, umfasst, und welches mit einem zweiten Element, welches durch einen Aktuator betätigbar ist, in Eingriff bringbar ist, bewirkt. Die Zusatzfunktion als Fußablage kann somit auf konstruktiv einfache Art und Weise realisiert werden.

Vorzugsweise ist das zweite Element ein Kontaktelement oder ein Positionierelement.

Gemäß einer weiteren bevorzugten Ausführungsform ist das Kontaktelement über einen Aktuator betätigbar, um in eine Position bewegt zu werden, in welcher das Kontaktelement mit dem ersten Element in Eingriff bringbar ist. Vorzugsweise ist auch das Positionierelement über einen Aktuator betätigbar. Als Aktuator können ein elektrischer Motor (mit oder ohne Getriebe), ein Hubmagnet, ein pneumatischer oder ein hydraulischer Steller etc. eingesetzt werden.

Es ist bevorzugt, wenn das erste Element und das zweite Element als Add-On-Komponenten an dem Fahrpedalmodul an dafür vorgesehenen Schnittstellen nachträglich bzw. zusätzlich angebracht werden. Die benötigten Bauteile können hierbei je nach Bedarf bezüglich der Fahrpedalmodule in Basisausführung und mit der Zusatzfunktion "Fußablage" optional montiert werden. Das heißt, die Basiskomponenten eines Fahrpedalmoduls (z. B. ein Lagerbock und das Pedalelement) verfügen über die Schnittstellen zur Aufnahme und Befestigung der Zusatzkomponenten für die Zusatzfunktion "Fußablage". Damit können mit einheitlichen Komponenten ein Fahrpedalmodul in Basisausführung und eines mit der Zusatzfunktion "Fußablage" gebaut werden, ohne eine zusätzliche Varianz der Fahrpedalmodul-Einzelteile.

Besonders bevorzugt ist es auch, wenn das Fahrpedalmodul eine Kraftabsenkungsfunktion aufweist, welche durch ein Zusatzmodul bewirkt wird, welches eine Feder und einen Betätiger aufweist. Für den Fahrer stellt das durch die Kraftabsenkungsfunktion abgesenkte Kraftniveau des Pedalelements des Fahrpedalmoduls einen noch weiter erhöhten Komfort dar, da weniger Kraft durch den Fuß des Fahrers für die Pedalbetätigung bis zum Wirksamwerden der Zusatzfunktion "Fußablage" aufgebracht werden muss.

Die Kraftabsenkungsfunktion ist vorzugsweise mit der Zusatzfunktion "Fußablage" kombinierbar.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: eine Schnittansicht eines Fahrpedalmoduls gemäß einer Ausführungsform,
- Figur 2: eine Schnittansicht eines Fahrpedalmoduls gemäß einer weiteren Ausführungsform,
- Figur 3: eine Schnittansicht eines Fahrpedalmoduls gemäß noch einer weiteren Ausführungsform,
- Figur 4: eine Schnittansicht eines Fahrpedalmoduls gemäß noch einer weiteren Ausführungsform,
- Figur 5: ein Kraft-Weg-Diagramm mit verschiedenen Kraft-Weg-Kennlinien,
- Figur 6: ein weiteres Kraft-Weg-Diagramm mit verschiedenen Kraft-Weg-Kennlinien.

### Ausführungsformen der Erfindung

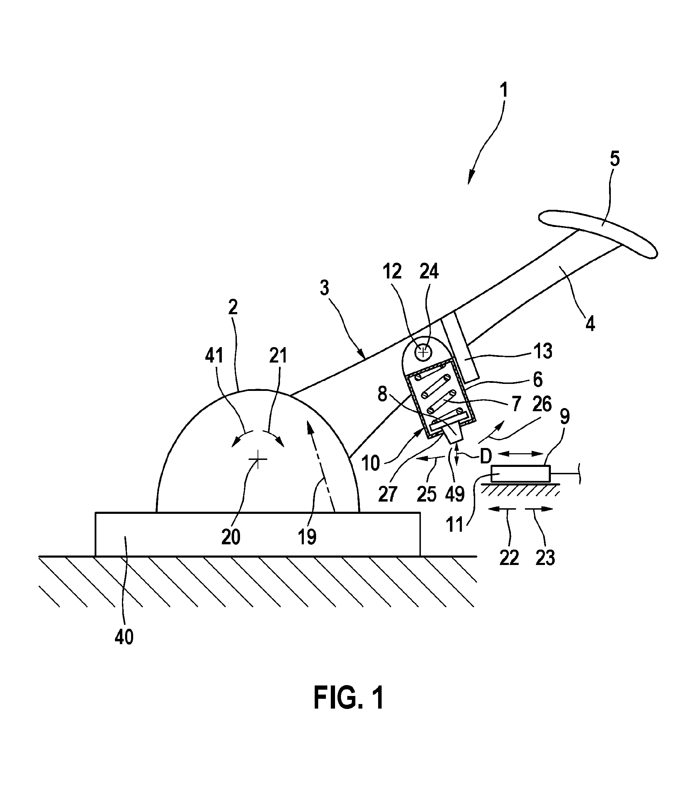

In Figur 1 ist eine Schnittansicht eines Fahrpedalmoduls 1 gemäß einer Ausführungsform gezeigt. Das Fahrpedalmodul 1 weist einen Lagerbock 2 und ein an dem Lagerbock 2 um eine Schwenkachse 20 schwenkbar gelagertes Pedalelement 3 bzw. Gaspedal auf. Das Pedalelement 3 weist einen zylinderförmigen Wellenstummel (nicht dargestellt) auf, mit welchem das Pedalelement 3 drehgekoppelt bzw. wirkverbunden ist. Der Lagerbock 2 weist eine Lagerschale mit einer darin vorgesehenen Bohrung auf, welche den Wellenstummel trägt. Das Pedalelement 3 weist darüber hinaus einen Pedalarm 4 und eine Pedalplatte 5 auf.

In einer in der Figur 1 dargestellten Ruhestellung des Pedalelements 3, in welcher das Pedalelement 3 nicht durch einen Fahrer betätigt wird, wird das Pedalelement 3 durch die Wirkung der Rückstellfedern, die nicht im Detail dargestellt sind, deren Wirkrichtung jedoch durch den Pfeil 19 gekennzeichnet ist, in dieser Ruhestellung gehalten. Die Ruhestellung des Pedalelements 3 entspricht dem Leerlauf. Durch Betätigen des Pedalelements 3 durch den Fahrer eines Kraftfahrzeugs, d. h. durch Niederdrücken des Pedalelements 3, wobei der Fuß eines Fahrers eine Kraft auf die Pedalplatte 5 des Pedalelements 3 ausübt, die der Kraft bzw. Wirkrichtung der Rückstellfedern entgegenwirkt, wird die Motorleistung des Kraftfahrzeugs gesteigert. Dabei wird das Pedalelement 3 um die Schwenkachse 20 in der Richtung des Pfeils 21 gedreht. Beim Zurückkehren des Pedalelements 3 in seine Ruhestellung, wenn der Fahrer die Pedalplatte 5 entlastet, schwenkt das Pedalelement 3 dann durch die standardmäßig vorgesehenen Rückstellfedern, deren Wirkrichtung durch den mit 19 gekennzeichneten Pfeil dargestellt ist, um die Schwenkachse 20 herum in Richtung des Pfeils 41.

Wird das Fahrzeug jedoch mit Hilfe einer automatischen Geschwindigkeitsregelung betrieben, wie z. B. mittels Cruise Control oder mittels Adaptive Cruise Control, dann wird die Betätigung des Pedalelements 3 durch den Fahrer überflüssig. Um jederzeit die automatische Geschwindigkeitsregelung z. B. im Falle einer plötzlichen Gefahrensituation wieder zu beenden, sollte der Fuß des Fahrers möglichst nah am Pedalelement 3 verbleiben. Um gleichzeitig auch den gesteigerten Komfort für den Fahrer vorzusehen, kann gemäß dieser Ausführungsform der Fahrer seinen Fuß auf der Pedalplatte 5 des Pedalelements 3 des Fahrpedalmoduls 1 belassen bzw. ablegen, wenn die Zusatzfunktion "Fußablage" aktiviert ist, welche darin besteht, dass dem Fahrer das Pedalelement 3, insbesondere die Pedalplatte 5 des Pedalelements 3, als Fußablage dient.

Die Zusatzfunktion "Fußablage" stellt ein Add-on dar und wird gemäß der in Fig. 1 gezeigten Ausführungsform über ein erstes Element 10, welches als Fußablagefunktionselement ausgebildet ist, welches mit einem zweiten Element 9 zusammenwirkt, erzielt. Das erste Element 10 weist ein Gehäuse 6 auf, in welchem eine Feder 7 und ein Betätiger 8 angeordnet sind. Das zweite Element 9 ist als Kontaktelement 11 ausgebildet. Das erste Element 10 ist in der in Fig. 1 gezeigten Ausführungsform an einer hierzu vorgesehenen Schnittstelle des Pedalarms 4, welche in der Ausführungsform als Zapfen 12 ausgebildet ist, montiert, und wird durch einen Anschlag 13 am Pedalarm 4 positioniert. Die Positionierung am Anschlag 13 erfolgt beispielsweise über eine nicht dargestellte Drehfeder zwischen dem ersten Element 10 und dem Pedalarm 4. Diese Drehfeder beaufschlagt das erste Element 10 in Richtung des Pfeils 26 elastisch gegen den Anschlag 13.

Bei nicht aktiverter Zusatzfunktion "Fußablage" befindet sich das zweite Element 9 bzw. das Kontaktelement 11 in einer zurückgezogenen ersten Position, welche in Figur 1 dargestellt ist, in welcher es nicht mit dem ersten Element 10 in Eingriff bringbar ist. Beim Aktivieren der Zusatzfunktion "Fußablage" betätigt ein Aktuator (nicht gezeigt) das zweite Element 9 bzw. das Kontaktelement 11, um es in eine zweite Position unterhalb des Betätigers 8 des ersten Elements 10 zu bringen, so dass der Betätiger 8 und das Kontaktelement 11 in Eingriff gelangen können. Dabei schiebt der Aktuator das Kontaktelement 11 lateral in Richtung des Pfeils 22 in die zweite Position.

Wenn der Fahrer des Kraftfahrzeugs nun seinen Fuß auf der Pedalplatte 5 des Pedalelements 3 ablegt, drückt das Gewicht des Fußes das Pedalelement 3 nach unten, wobei das Pedalelement 3 in Richtung des Pfeils 21 um die Schwenkachse 20 geschwenkt wird. Dabei verringert sich kontinuierlich ein Abstand D zwischen dem Betätiger 8 des ersten Elements 10 und dem zweiten Element 9 bzw. dem Kontaktelement 11, bis sich das Kontaktelement 11 und das erste Element 10 kontaktieren. Jetzt ist die bereits aktivierte Zusatzfunktion "Fußablage" wirksam. Der Betätiger 8 drückt auf die Feder 7, und die Federkraft wirkt gegen die Gewichtskraft des Fußes, der auf dem Pedalelement 3 abgelegt ist. Als Aktuator zur Betätigung bzw. zum lateralen Verschieben des zweiten Elements 9 bzw. des Kontaktelements 11 von der ersten Position in die zweite Position und umgekehrt können ein elektrischer Motor (mit oder ohne Getriebe), ein Hubmagnet, ein pneumatischer oder ein hydraulischer Steller etc. eingesetzt werden. Beim Auftreffen des Betätigers 8 auf das Kontaktelement 11 wird somit durch die zusätzliche Feder 7 das gewünschte erhöhte Kraftniveau erzielt, wobei das Pedalelement 3 als Fußablage für den Fuß eines Fahrers wirkt.

Wenn eine Deaktivierung der Zusatzfunktion "Fußablage" gewünscht wird, kann der Fahrer beispielsweise die auf das Pedalelement 3 einwirkende Kraft, die bei Nutzung des Pedalelements 3 als Fußablage lediglich dem Gewicht des Fußes entspricht, erhöhen, indem er das Pedalelement 3 weiter nach unten drückt, wobei der Betätiger 8 in das Gehäuse 6 gedrückt wird und die Feder 7 weiter komprimiert wird. Ist der Betätiger 8 in das Gehäuse 6 hineingedrückt, d. h. die Oberseite 49 des Betätigers 8 schließt bündig mit dem Gehäuse 6 ab, so dass ein weiteres Niederdrücken des Betätigers 8 nicht mehr möglich ist, schnappt das erste Element 10 in Pfeilrichtung 25 durch Überdrücken der nicht dargestellten Drehfeder vom Kontaktelement 11 bzw. vom zweiten Element 9 zurück, wobei sich das Gehäuse 6 um die Schwenkachse 24 in Richtung des Pfeils 25 von dem Kontaktelement 11 bzw. von dem zweiten Element 9 wegdreht. Das erhöhte Kraftniveau fällt damit auf das normale Niveau ab und die Zusatzfunktion "Fußablage" ist abgeschaltet.

Das Abschalten bedeutet gleichzeitig für den das zweite Element 9 betätigenden Aktuator, dass er das Kontaktelement 11 bzw. das zweite Element 9, wie oben bereits beschrieben, in seine Ausgangslage bzw. in die erste Position in Richtung des Pfeils 23 zurück zieht. Wenn der Fahrer den Fuß vom Pedalelement 3 weg nimmt, so dass das Pedalelement 3 bzw. die Pedalplatte 5 entlastet wird und das Pedalelement 3 durch die Wirkung der Rückstellfedern (Pfeil 19) in Richtung des Pfeils 41 um die Schwenkachse 20 in die Ruheposition zurückgestellt wird, wird das erste Element 10 wieder durch die nicht dargestellte Drehfeder elastisch gegen den Anschlag 13 vorgespannt, wobei das Gehäuse 6 in Richtung des Pfeils 26 zurück in die Ausgangsposition, welche in Figur 1 dargestellt ist, um die Schwenkachse 24 geschwenkt wird.

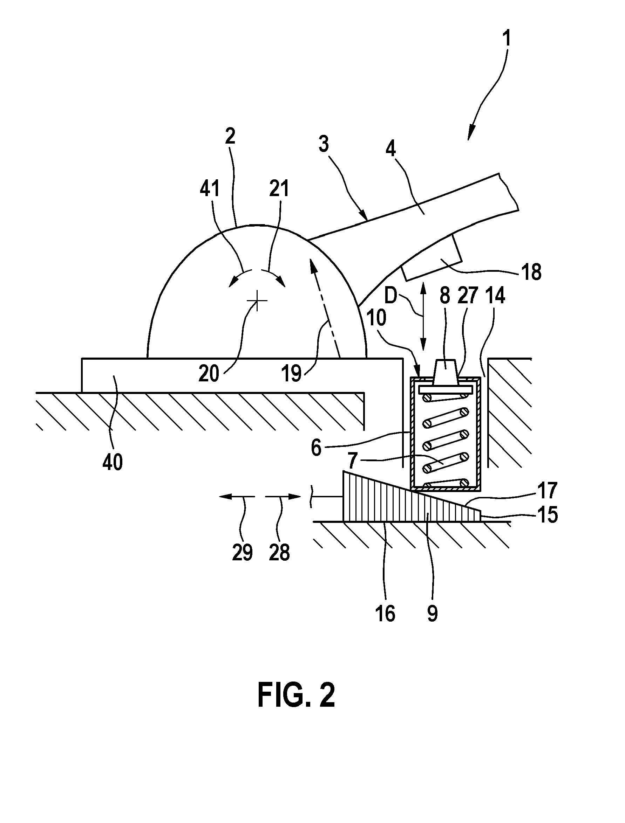

Fig. 2 zeigt eine Schnittansicht eines Fahrpedalmoduls 1 gemäß einer weiteren Ausführungsform. Das Fahrpedalmodul 1 ist im Wesentlichen wie das in Fig. 1 dargestellte Fahrpedalmodul 1 aufgebaut und umfasst einen Lagerbock 2 und ein Pedalelement 3, welches einen Pedalarm 4 und eine Pedalplatte 5 (hier nicht weiter dargestellt) aufweist. Jedoch wird im Gegensatz zu der in Fig. 1 gezeigten Ausführungsform die Zusatzfunktion "Fußablage" dadurch erzielt, dass das erste Element 10, welches im Wesentlichen wie das in Fig. 1 dargestellte erste Element 10 aufgebaut ist, indem in einem Gehäuse 6 eine Feder 7 und ein Betätiger 8, der durch eine Öffnung 27 aus dem Gehäuse 6 ragt, vorgesehen sind, nicht an dem Pedalarm 4 vorgesehen ist, sondern unterhalb des Pedalarms 4 in einer entsprechenden Aussparung 14 des Lagerbocks 2 untergebracht ist. Am Boden der Aussparung 14 unterhalb des ersten Elements 10 ist darüber hinaus als zweites Element 9 ein Positionierelement 15 vorgesehen, welches mit einer unteren Fläche 16 an dem Boden der Aussparung 14 anliegt bzw. darauf lagert, und welches eine obere Fläche 17 mit einer Neigung aufweist. Die in Figur 2 gezeigte Position des Positionierelements 15 entspricht einer zweiten Position, in welcher die Zusatzfunktion "Fußablage" aktiviert ist. Wenn die Zusatzfunktion "Fußablage" deaktiviert wird, schiebt oder zieht ein Aktuator (nicht dargestellt) das Positionierelement 15 in Richtung des Pfeils 29 in eine erste Position, wobei das erste Element 10 auf der geneigten oberen Fläche 17 des Positionierelements 15 gleitet, wobei es nach unten in der Aussparung 14 versenkt wird.

Um von der ersten Position in die zweite Position zu gelangen, wird das Positionierelement 15 von dem nicht dargestellten Aktuator betätigt, wobei das Positionierelement 15 in Richtung des Pfeils 28 geschoben wird. Wenn die in der in Figur 2 dargestellte zweite Position erreicht wird, ist die Zusatzfunktion "Fußablage" wieder aktiviert. Bei nicht durch den Fahrer betätigtem Pedalelement 3 besteht zwischen dem Betätiger 8 und einem an der Unterseite des Pedalarms 4 angebrachten Anschlag 18, welcher an dem Pedalarm 4 oberhalb des ersten Elements 10 angeordnet ist, ein Abstand D. Wenn der Fahrer den Fuß auf dem Pedalelement 3 bzw. auf der Pedalplatte 5 desselben ablegt, verringert sich der Abstand D kontinuierlich, da das Gewicht des Fußes auf das Pedalelement 3 eine Kraft entsprechend der Gewichtskraft ausübt, wobei das Pedalelement 3 um die Schwenkachse 20 in Richtung des Pfeils 21 gedreht wird. Wenn der Anschlag 18 auf den Betätiger 8 auftrifft, der wiederum mit der Feder 7 in Wirkverbindung steht, erzeugt die Feder 7 das erhöhte Kraftniveau, um die Zusatzfunktion "Fußablage" bereitzustellen.

Das Abschalten der Zusatzfunktion "Fußablage" erfolgt im Wesentlichen analog zu der in Fig. 1 beschriebenen Ausführungsform, indem der Fahrer die Krafteinwirkung auf das Pedalelement 3 erhöht, bis der Betätiger 8 in das Gehäuse 6 hineingedrückt worden ist und eine weitere Betätigung nicht möglich ist. Anhand der Winkelstellung des Pedalelements 3 erkennt eine elektronische Steuerung, dass der Fahrer aktiv das Pedalelement 3 betätigen will und schaltet die Zusatzfunktion "Fußablage" ab. Die Steuerung veranlasst dann einen nicht dargestellten Aktuator, das Positionierelement 15 zu betätigen, um es in Richtung des Pfeils 29 in die erste Position zurückzuziehen, wobei sich das erste Element 10 auf der geneigten oberen Fläche 17 des Positiionierelements gleitend nach unten bewegt, wobei es in die Aussparung 14 abgesenkt wird und das erhöhte Kraftniveau wieder auf das normale Niveau abfällt.

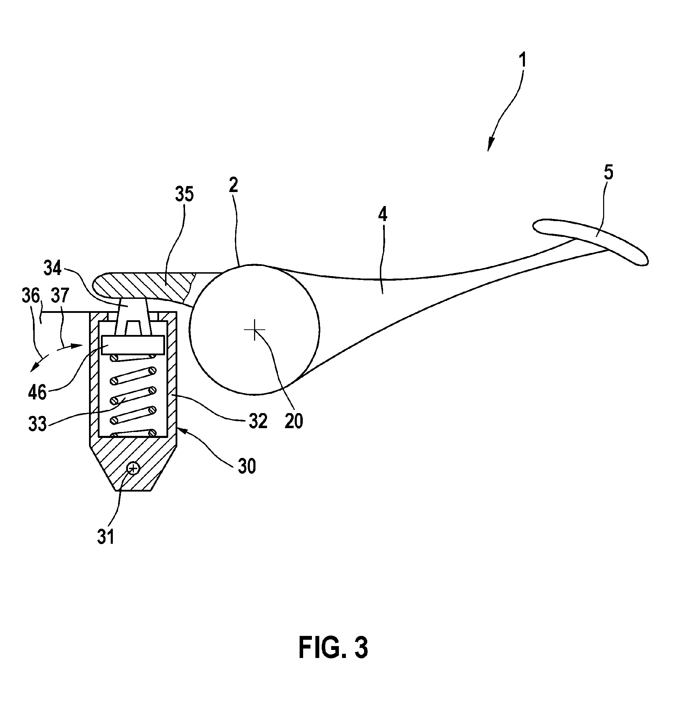

Fig. 3 zeigt eine Schnittansicht eines Fahrpedalmoduls 1 gemäß einer weiteren Ausführungsform, bei welcher eine weitere Funktion, nämlich eine Kraftabsenkungsfunktion, realisiert ist, bei welcher die zum Betätigen des Pedalelements 3 notwendige Kraft z. B. vor dem Aktivieren der oben beschriebenen Zusatzfunktion "Fußablage" abgesenkt wird. Jedoch ist auch die Kraftabsenkungsfunktion unabhängig von der Zusatzfunktion "Fußablage" oder anderen automatischen Steuerfunktionen als Stand Alone Lösung realisierbar.

In dieser Ausführungsform sind zur Bereitstellung der Kraftabsenkungsfunktion Zusatzkomponenten in Form eines Zusatzmoduls 30 vorgesehen. Das Zusatzmodul 30 weist ein schwenkbar um die Schwenkachse 31 gelagertes Gehäuse 32 auf, in welchem eine Feder 33, die als Druckfeder ausgeführt ist, und ein Betätiger 34 angeordnet sind. Darüber hinaus ist an dem Pedalelement 3 ein Anschlag 35 drehfest fixiert.

In der deaktivierten Position (nicht in Figur 3 dargestellt), d. h. wenn die Kraftabsenkungsfunktion deaktiviert ist, welche realisiert ist, wenn das Gehäuse 32 in Richtung des Pfeils 36 weggeschwenkt wird, stehen der Betätiger 34 des Zusatzmoduls 30 und der Anschlag 35 nicht in Kontakt.

Ein Aktuator (nicht dargestellt) wird durch das Steuergerät (nicht dargestellt) angesteuert, um beim Einschalten der Kraftabsenkungsfunktion das um die Schwenkachse 31 schwenkbar gelagerte Gehäuse 32 in Richtung des Pfeils 37, wie in Figur 3 dargestellt ist, zu schwenken. In dieser Position kann der Anschlag 35 des Pedalelements 3 mit dem Betätiger 34 in Eingriff gelangen, was in Figur 3 dargestellt ist, wodurch die Kraftabsenkungsfunktion wirksam wird. Die Feder 33 drückt dabei über den Betätiger 34 von unten gegen den Anschlag 35 und wirkt den beiden Rückstellfedern (nicht dargestellt) des Fahrpedalmoduls 1 entgegen, deren Kraft wiederum wirkt, um das Pedalelement 3 in seine Ruheposition (siehe Pfeil 19 in Figur 1) zurückzustellen. Hierdurch wird die normale Kraft/Weg-Kennlinie des Fahrpedalmoduls 1 abgesenkt. Das heißt, das Pedalelement 3 wird mit verkleinerter Rückstellkraft zurückgestellt. Für den Fahrer stellt das abgesenkte Kraftniveau einen zusätzlichen Komfort dar, da wenig Kraft durch den Fuß des Fahrers für die Pedalbetätigung beispielsweise bis zum Wirksamwerden der Zusatzfunktion "Fußablage" aufgebracht werden muss.

Die standardmäßigen zwei Rückstellfedern (in Figur 1 durch den Pfeil 19 symbolisiert) des Fahrpedalmoduls 1 arbeiten unabhängig von der oben beschriebenen Zusatzfunktion "Fußablage" und der Kraftabsenkungsfunktion, so dass die Sicherheit nach wie vor gegeben ist.

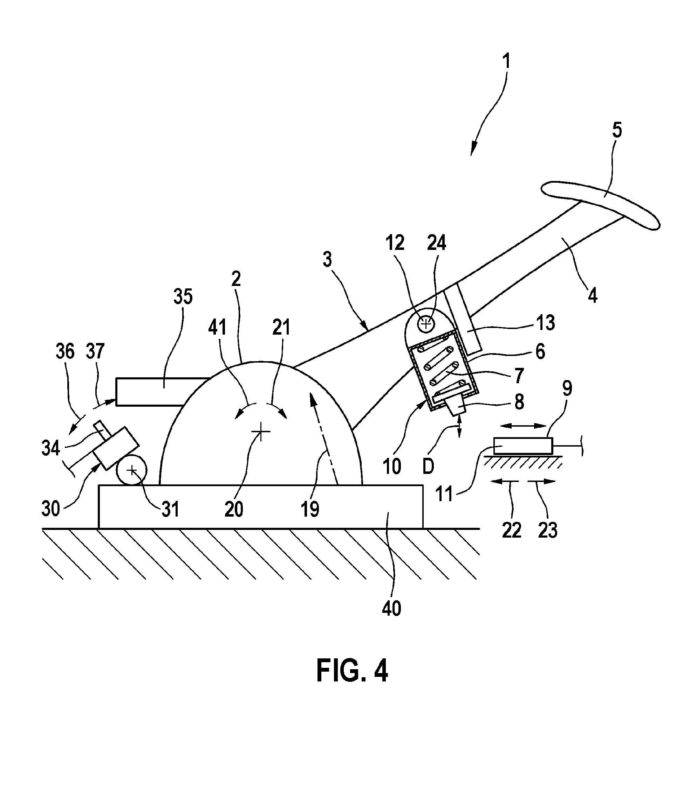

Fig. 4 zeigt eine Schnittansicht eines Fahrpedalmoduls 1 gemäß einer weiteren Ausführungsform. Hierbei wird die Zusatzfunktion "Fußablage" mit den in Zusammenhang mit Fig. 1 beschriebenen Komponenten, nämlich mit dem ersten Element 10, welches an dem Pedalarm 4 gelagert ist, und welches mit dem zweiten Element 9 in Form eines Kontaktelements 11 bei Einschalten der Zusatzfunktion "Fußablage" in Eingriff gelangt, realisiert. Weiterhin ist am rückwärtigen Abschnitt des Fahrpedalmoduls 1 ein Zusatzmodul 30 angeordnet, welches mit dem Anschlag 35 durch einen Aktuator (nicht dargestellt) in Eingriff bringbar ist, um zusätzlich die Kraftabsenkungsfunktion vorzusehen, wie sie in Zusammenhang mit der in Fig. 3 gezeigten Ausführungsform bereits beschrieben wurde. Die dargestellten Zusatzfunktionen "Fußablage" und "Kraftabsenkungsfunktion" sind jedoch beliebig kombinierbar bzw. funktionieren unabhängig von den standardmäßig im Fahrpedalmodul 1 vorhandenen beiden Rückstellfedern (nicht dargestellt). Die Pedal-Rückstellfedern bringen stets unabhängig von den Zusatzfunktionen das Fahrpedalmodul 1 in seine Ausgangsstellung (Leerlaufposition), wie in Zusammenhang mit Figur 1 bereits beschrieben, zurück.

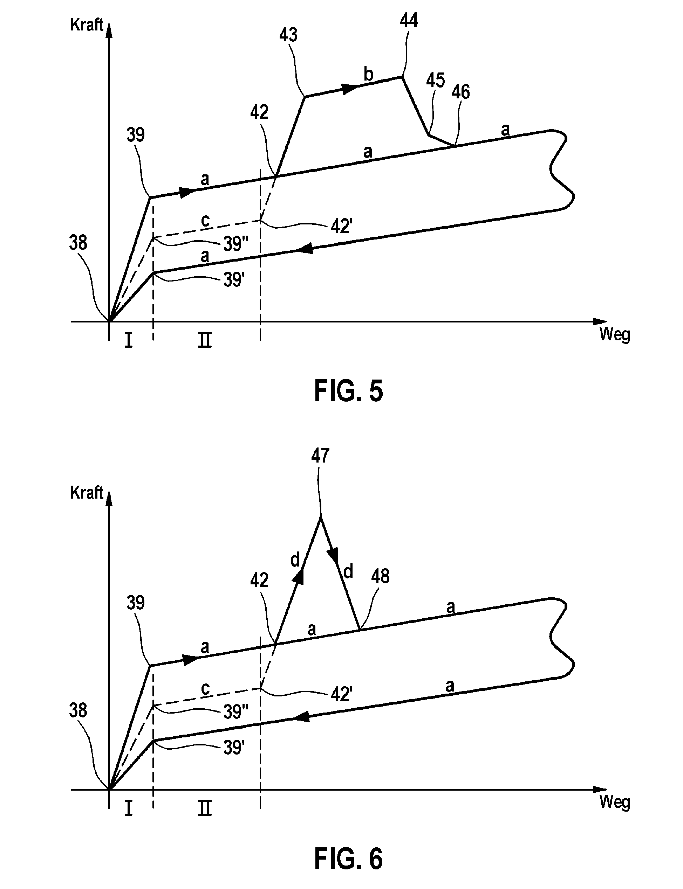

Fig. 5 ist ein Kraft-Weg-Diagramm, welches den Kraft-Weg-Verlauf gemäß verschiedener Funktionen kennzeichnet. Der mit *a* gekennzeichnete Verlauf stellt die normale Kraft/Weg-Kennlinie des Fahrpedalmoduls 1 dar. Die normale Kraft/Weg-Kennlinie kennzeichnet den Kraft-Weg-Verlauf des Fahrpedalmoduls 1 bei normalem Betrieb, d. h. ohne jegliche zusätzliche Funktionen bei normaler Betätigung des Pedalelements 3 durch den Fuß eines Fahrers, um ein Kraftfahrzeug entsprechend der auf das Pedalelement 3 durch den Fuß ausgeübten Kraft zu beschleunigen oder zu verzögern.

Am Nullpunkt 38 des Kraft-Weg-Diagramms beginnt der Verlauf der normalen Kraft/Weg-Kennlinie a, wobei das Pedalelement 3 in der in Figur 1 dargestellten durch die Rückstellfedern bewirkten Ruhestellung ist, in welcher sich auch das zweite Element 9 bzw. das Kontaktelement 11 in der ersten zurückgezogenen Position befindet, und das Zusatzmodul 30 nicht in Eingriff mit dem Anschlag 35 steht (siehe Figur 3). Auch bei der in Figur 2 dargestellten Ausführungsform befindet sich bezüglich der Kennlinie a am Nullpunkt 38 das zweite Element 9 bzw. das Positionierelement 15 in der ersten zurückgezogenen Position, in welcher es in der Aussparung 14 im Lagerbock versenkt ist. In einem ersten kurzen Abschnitt, der durch I gekennzeichnet ist und an dem Punkt 39 endet, findet ein steiler Anstieg der normalen Kraft/Weg-Kennlinie a statt, bis der Verlauf der Kraft/Weg-Kennlinie bei normaler Funktion des Fahrpedalmoduls 1 in einen vergleichsweise flach verlaufenden stetigen Anstieg übergeht. Der Verlauf der Kraft/Weg-Kennlinie a entspricht dabei einem kontinuierlichen Niederdrücken der Pedalplatte 5 durch den Fuß eines Fahrers, wobei das Pedalelement 3 kontinuierlich um die Schwenkachse 20 in Richtung des Pfeils 21 geschwenkt wird, was theoretisch bis zum Anschlag des Pedalarms 4 an einen Sockel 40 des Lagerbocks 2 möglich ist.

Wenn der Fahrer eine Verzögerung des Kraftfahrzeugs wünscht, und dabei die durch den Fuß des Fahrers auf die Pedalplatte 5 aufgebrachte Kraft wieder verringert, kehrt die normale Kraft/Weg-Kennlinie auf der unteren Linie der durch a gekennzeichneten Kurve wieder zu einem Punkt 39' zurück, der bezüglich der den Weg kennzeichnenden Abzisse des Diagramms ungefähr mit dem Punkt 39 übereinstimmt, sich jedoch bezüglich der die Kraft kennzeichnenden Ordinate unterhalb des Punktes 39 befindet.

Wenn der Fahrer die Betätigungskraft auf das Pedalelement 3 reduziert, verläuft die Kennlinie auf dem unteren Ast der durch a gekennzeichneten Kurve über den Punkt 39' zurück zum Nullpunkt 38, wobei die Rückstellfedern, welche in Richtung des durch den Pfeil 19 in Figur 1, 2 und 4 gekennzeichneten Richtung wirken, das Pedalelement 3 zurückstellen. Dabei dreht sich das Pedalelement 3 in Richtung des Pfeils 41 um die Schwenkachse 20.

Beim Aktivieren der Zusatzfunktion "Fußablage", wie in Zusammenhang mit Figur 1 beschrieben wurde, sind die folgenden Kraft-Weg-Verläufe möglich.

Als nächstes wird eine Situation beschrieben, in welcher lediglich die Zusatzfunktion "Fußablage" aktiviert wird. Das heißt, wenn die Zusatzfunktion "Fußablage" aktiviert wird, befindet sich das Kontaktelement 11 bzw. das Positionierelement 15 in der zweiten Position, wie im Zusammenhang mit der Figur 1 bzw. Figur 2 beschrieben wurde, wobei das Kontaktelement 11 in Richtung des Pfeils 22 und das Positionierelement 15 in Richtung des Pfeils 28 betätigt ist. Benutzt der Fahrer das Pedalelement 3 nicht als Fußablage, so dass keine Kraft auf die Pedalplatte 5 des Pedalelements 3 aufgebracht wird, existiert jedoch in der zweiten Position des Kontaktelements 11 bzw. des Positionierelements 15 der Abstand D (vgl. Figuren 1 und 2) zwischen dem Kontaktelement 11 und dem Betätiger 8 (Figur 1) bzw. zwischen dem Betätiger 8 und dem Anschlag 18 (Figur 2). Jetzt ist die Zusatzfunktion "Fußablage" aktiviert, jedoch noch nicht wirksam.

Legt der Fahrer nun jedoch den Fuß auf der Pedalplatte 5 ab, so drückt das Gewicht des Fußes die Pedalplatte 5 nach unten, wobei das Pedalelement 3 um die Schwenkachse 20 in Richtung des Pfeils 21 gedreht wird und die Kurve zunächst dem Verlauf der Kraft/Weg-Kennlinie a folgt.

Dabei verringert sich der Abstand D zwischen dem Kontaktelement 11 und dem Betätiger 8 (Figur 1) bzw. zwischen dem Betätiger 8 und dem Anschlag 18 (Figur 2) kontinuierlich, bis das Kontaktelement 11 an den Betätiger 8 (Figur 1) bzw. der Betätiger 8 an den Anschlag 18 (Figur 2) anschlägt, was dem Punkt 42 auf der Kurve a in Figur 5 entspricht. Hier wird die bereits aktivierte Zusatzfunktion "Fußablage" nun wirksam, indem die Feder 7 (Figur 1 und Figur 2) gegen die Gewichtskraft des Fußes wirkt. Der Fahrer kann das Pedalelement 3 nun als Fußablage nutzen, wobei das Kontaktelement 11 und der Betätiger 8 (Figur 1) bzw. der Betätiger 8 und der Anschlag 18 (Figur 2) in Eingriff bleiben, und wobei die entsprechend dem Gewicht des Fußes des Fahrers auf das Pedalelement 3 wirkende Kraft zwischen den Punkten 42 und 43 auf der durch b gekennzeichneten Kurve liegt. Das heißt, das Gewicht des Fußes eines Fahrers, welches bei aktivierter und wirksamer Zusatzfunktion "Fußablage" eine Kraft auf das Pedalelement 3 ausübt, die zwischen den Punkten 42 und 43 liegt, drückt das Pedalelement 3 deutlich weniger nieder verglichen mit einer Betätigung des Pedalelements 3 ohne Zusatzfunktion "Fußablage" (siehe Kurve a). Anders gesagt, entspricht die bei aktivierter und wirksamer Zusatzfunktion "Fußablage" auf das Pedalelement 3 lediglich durch das Gewicht des Fußes ausgeübte Kraft einem kleineren Schwenkwinkel des Pedalelements 3 um die Schwenkachse 20 herum (in Richtung des Pfeils 21 in Figur 1) als bei normaler Funktion des Fahrpedalmoduls 1, wenn die Zusatzfunktion "Fußablage" deaktiviert ist.

Wünscht der Fahrer z. B. aufgrund einer plötzlich auftretenden Gefahrensituation oder dergleichen eine Deaktivierung der Zusatzfunktion "Fußablage", so kann er dies durch Aufbringen einer zusätzlichen Kraft auf die Pedalplatte 5 des Pedalelements 3 bewirken, die größer ist als lediglich die durch das Gewicht des Fußes aufgebrachte Kraft. Das heißt, der Fahrer drückt die Pedalplatte 5 nach unten, wobei die Feder 7 weiter komprimiert wird und der Betätiger 8 vollständig in das Gehäuse 6 gedrückt wird, bis die Oberseite 49 bündig mit der oberen Wand des Gehäuses 6 ist und ein weiteres Betätigen des Betätigers 8 nicht mehr möglich ist. Die Kraft/Weg-Kennlinie folgt hierbei weiterhin dem Verlauf der Kurve b bis zu dem Punkt 44, wo die oben beschriebene Situation erreicht ist, dass der Betätiger 8 nicht weiter betätigt werden kann. Eine elektronische Steuerung erkennt durch das Aufbringen eines entsprechenden Kraftniveaus auf das Pedalelement 3 bzw. anhand des zurückgelegten Drehwinkels des Pedalelements 3 bei aktivierter und wirksamer Zusatzfunktion "Fußablage", dass ein Abschalten der Zusatzfunktion "Fußablage" erwünscht ist und deaktiviert die Zusatzfunktion "Fußablage" an dem Punkt 44 in Figur 5, indem der Aktuator angesteuert wird, um das Kontaktelement 11 bzw. das Positionierelemet 15 in die erste Position (in Richtung des Pfeils 23 in Figur 1 bzw. 29 in Figur 2) zurückzuziehen, wobei das Pedalelement 3 jetzt wieder freigegeben ist, um bei normaler Funktion von dem Fahrer betätigt zu werden. Nach Deaktivieren der Zusatzfunktion "Fußablage", was gleichzeitig mit dem Deaktivieren einer automatischen Fahrzeuggeschwindigkeitsregelung wie z. B. einer Cruise Control erfolgen kann, folgt die Kraft/Weg-Kennlinie nun wieder dem oben bereits beschriebenen Verlauf der durch a gekennzeichneten Kurve.

Dabei kehrt die Kraft/Weg-Kennlinie über den Punkt 45 und den Punkt 46 auf die normale Kraft/Weg-Kennlinie a zurück. Der Knick der Kurve b an dem Punkt 45 stellt schematisch einen Erfahrungswert dar, wodurch ein harmonisches Auslaufen der Zusatzfunktion "Fußablage" angedeutet werden soll.

Als nächstes wird eine Situation beschrieben, welche eine Aktivierung der Kraftabsenkungsfunktion einbezieht.

Beim Aktivieren der Kraftabsenkungsfunktion wird - wie oben im Zusammenhang mit Figur 3 beschrieben - das Zusatzmodul 30 durch einen durch das Steuergerät angesteuerten Aktuator um die Schwenkachse 31 des Gehäuses 32 in eine Position geschwenkt (in Richtung des Pfeils 37 in Figur 3 bzw. 4), in der der Anschlag 35 mit dem Betätiger 34 in Eingriff gelangt, wobei die Feder 33 den Betätiger 34 nach oben gegen den Anschlag 35 drückt. Tritt der Fahrer auf die Pedalplatte 5 des Pedalelements 3, muss er eine Kraft entgegen der Kraft der Rückstellfedern aufbringen. Die aufzubringende Kraft wird durch die Wirkung der Feder 33, die von unten gegen den Anschlag 35 drückt, verringert bzw. ein Schwenken des Pedalelements 3 um die Schwenkachse 20 in Richtung des Pfeils 21 wird erleichtert, was dem Fahrer einen erhöhten Komfort bietet. Dabei folgt die Kraft/Weg-Kennlinie von dem Punkt 38 über den Punkt 39" bis zu dem Punkt 42' dem Verlauf der durch c gekennzeichneten gestrichelten Kurve, die bezüglich der Kraft unterhalb der durch a gekennzeichneten Kurve liegt.

Die Kraftabsenkungsfunktion ist solange wirksam, wie der Betätiger 34 von unten gegen den Anschlag 35 drückt. Wenn der Fahrer eine Kraft auf die Pedalplatte 5 aufbringt, schwenkt das Pedalelement 3 um die Schwenkachse 20, wobei der drehfest mit dem Pedalelement 3 verbundene Anschlag 35 mit in Richtung des Pfeils 21 dreht. Je weiter sich der Anschlag 35 von dem Gehäuse 32 des Zusatzmoduls 30 entfernt, umso weiter wird der Betätiger 34 durch die Feder 33 nach oben gedrückt, bis eine Basisplatte 46 des Betätigers 34 an die obere Gehäusewand des Gehäuses 32 anschlägt. Drückt der Fahrer die Pedalplatte 5 nun weiter nach unten, hebt der Anschlag 35 von dem Betätiger 34 ab. Dies entspricht dem Punkt 42' in Figur 5. Die KraftANeg-Kennlinie des Pedalelements 3 folgt nun bei weiterem Niederdrücken der Pedalplatte 5 dem normalen Verlauf der durch a gekennzeichneten Kraft/Weg-Kennlinie, wenn keine weiteren Funktionen aktiviert sind.

Alternativ kann die Kraftabsenkungsfunktion auch mit der Zusatzfunktion "Fußablage" kombiniert werden, wobei eine Kraftabsenkung der normalen Kraft/Weg-Kennlinie vor Wirksamwerden der Zusatzfunktion "Fußablage" realisiert wird. Die Kraftabsenkungsfunktion erfolgt in den durch I und II gekennzeichneten Abschnitten entlang der durch c gekennzeichneten gestrichelten Kurve, beginnend an dem Punkt 38 bis zu dem Punkt 42', wie oben bereits beschrieben. Wenn zusätzlich die Zusatzfunktion "Fußablage" aktiviert ist, folgt die Kraft/Weg-Kennlinie an dem Punkt 42' dem Verlauf der durch b gekennzeichneten Kurve, wenn der Fahrer den Fuß auf der Pedalplatte 5 ablegt und das Kontaktelement 11 und der Betätiger 8 (Figur 1) bzw. der Betätiger 8 und der Anschlag 18 (Figur 2) nach Überwinden des Abstands D in Eingriff gelangen. Die Deaktivierung der Zusatzfunktion "Fußablage" und das Zurückkehren der Kraft/Weg-Kennlinie auf die durch a gekennzeichnete Linie erfolgt ebenfalls wie oben bereits bezüglich des Verlaufs der durch b gekennzeichneten Kurve beschrieben.

Fig. 6 ist ein weiteres Kraft-Weg-Diagramm eines abgewandelten Ausführungsbeispiels eines Fahrpedalmoduls 1, wobei sich die Kraft-Weg-Kennlinien des abgewandelten Ausführungsbeispiels, die auch in Figur 6 durch *a* und *c* gekennzeichnet sind, nicht von denen bereits im Zusammenhang mit Fig. 5 beschriebenen unterscheiden. Das abgewandelte Fahrpedalmodul 1 hat ein Element, das für eine Kick-Down-Funktion sorgt. Dieses Element, welches häufig auch als Kick-Down-Element bezeichnet wird, ist im Stand der Technik bekannt und daher erübrigt sich eine Darstellung des bekannten Kick-Down-Elements. Der durch den Buchstaben a gekennzeichnete Verlauf entspricht wiederum der normalen Funktion des Fahrpedalmoduls 1, wobei weder die Zusatzfunktion "Fußablage" noch die Kraftabsenkungsfunktion aktiviert ist. Der durch den Buchstaben c gekennzeichnete Verlauf der Kraft/Weg-Kennlinie in den durch I und II gekennzeichneten Abschnitten stellt die oben beschriebene Kraftabsenkungsfunktion dar.

Jedoch kennzeichnet hier der durch den Buchstaben d dargestellte Abschnitt der Kurve die im Stand der Technik allgemein bekannte sogenannte "Kick-Down"-Funktion, die an dem Punkt 42 wirksam wird, wobei die Kurve d an dem Punkt 42 durch das Wirksamwerden eines Widerstandes des Kick-Down-Elements, welches weiter oben beschrieben wurde, durch einen steilen Kraftanstieg gekennzeichnet ist. Der Widerstand wird an der Spitze 47 der durch d gekennzeichneten Kurve überwunden, wonach ein steiler Kraftabfall bis zu dem Punkt 48 erfolgt und die Kraft/Weg-Kennlinie des Pedalelements 3 wieder der normalen Kraft/Weg-Kennlinie entlang der Kurve a folgt.

Durch Anwenden der Kick-Down-Funktion kann der Fahrer durch plötzliches Durchtreten des Pedalelements 3 z. B. eine automatische Geschwindigkeitsregelung ausschalten bzw. deaktivieren, um das Pedalelement 3 wieder allein durch die Kraft des Fußes des Fahrers zu betätigen.

Wie in Figur 6 dargestellt ist, kann die Kick-Down-Funktion mit der Kraftabsenkungsfunktion, die wie bereits im Zusammenhang mit der durch c gekennzeichneten Kurve in Figur 5 beschrieben realisiert wird, kombiniert werden, was dem Fahrer einen erhöhter Komfort bietet, da er vor Aktivieren der Kick-Down-Funktion eine vergleichsweise geringe Kraft auf das Pedalelement 3 bzw. auf die Pedalplatte 5 aufbringen muss.

Außerdem kann die Kick-Down-Funktion bei aktivierter und wirksamer Kraftabsenkungsfunktion im Vergleich zur im Stand der Technik üblichen Position der Kick-Down-Position in Richtung kleinerem Betätigungswinkel bzw. Drehwinkel des Pedalelements 3 "vorgezogen" werden, was dem Fahrer eine sportlichere Fahrweise ermöglicht. Das heißt, die Kick-Down-Funktion wird im Vergleich zu dem bisher im Stand der Technik normalen Verlauf der Kraft/Weg-Kennlinie, die durch a gekennzeichnet ist, bereits bei einem weniger weiten Niederdrücken des Pedalelements 3 erreicht.

Durch das winkelmäßige Vorziehen und damit durch das schnellere Auslösen der Kick-Down-Funktion kann der Fahrer schneller reagieren, was auch einen zusätzlichen Sicherheitsaspekt darstellt.

Die Steuerung der oben beschriebenen Kennlinien-Kombinationen entsprechend dem Verlauf der Kurven a, b, c oder d erfolgt über eine Elektronik bzw. ein Steuergerät, welches die entsprechenden Aktuatoren, d. h. den das Kontaktelement 11 bzw. das Positionierelement 15 betätigenden Aktuator und den das Zusatzmodul 30 betätigenden Aktuator, ansteuert.

Die Einzelheiten der verschiedenen Ausführungsbeispiele sind miteinander kombinierbar, sofern nichts Gegenteiliges erwähnt wird.

Durch das oben beschriebene Fahrpedalmodul 1, welches eine Zusatzfunktion "Fußablage" und/oder eine Kraftabsenkungsfunktion realisiert, kann dem Fahrer sowohl eine erhöhte Sicherheit als auch ein verbesserter Komfort während des Fahrens auf konstruktiv einfache und damit kostengünstige Art und Weise bereitgestellt werden.

## Patentansprüche

1. Fahrpedalmodul (1) zum Steuern der Motorleistung eines Kraftfahrzeugs, welches ein über einen vorbestimmten Schwenkwinkelbereich schwenkbar an einem Lagerbock (2) gelagertes Pedalelement (3) umfasst, wobei die Motorleistung durch Betätigen des Pedalelements (3) durch einen Fahrer des Kraftfahrzeugs veränderbar ist,
**dadurch gekennzeichnet, dass**
das Fahrpedalmodul (1) eine Zusatzfunktion aufweist, bei welcher das Pedalelement (3) als Fußablage für einen Fuß des Fahrers wirkt.

2. Fahrpedalmodul (1) nach Anspruch 1,
**dadurch gekennzeichnet, dass**
die Zusatzfunktion beim Einschalten einer automatischen Steuerung, insbesondere beim Einschalten einer automatischen Geschwindigkeitsregelung, aktiviert wird.

3. Fahrpedalmodul (1) nach Anspruch 1 oder 2,
**dadurch gekennzeichnet, dass**
die Zusatzfunktion des Fahrpedalmoduls (1) als Fußablage durch eine abschnittsweise Veränderung der Kraft/Weg-Kennlinie des Fahrpedalmoduls (1) erfolgt.

4. Fahrpedalmodul (1) gemäß einem oder mehreren der Ansprüche 1 bis 3,
**dadurch gekennzeichnet, dass**
eine Kraftabsenkungsfunktion vorgesehen ist, welche durch ein Zusatzmodul (30) bewirkt wird, welches eine Feder (33) und einen Betätiger (34) aufweist.

5. Fahrpedalmodul (1) gemäß einem oder mehreren der Ansprüche 1 bis 4,
**dadurch gekennzeichnet, dass**
die Zusatzfunktion durch ein erstes Element (10), welches mit einem zweiten Element (9) über einen Aktuator in Eingriff bringbar ist, bewirkt wird.

6. Fahrpedalmodul (1) gemäß Anspruch 5,
**dadurch gekennzeichnet, dass**
das erste Element einen Betätiger (8) und eine Feder (7) aufweist, welche in einem Gehäuse (6) angeordnet sind.

7. Fahrpedalmodul (1) gemäß Anspruch 5 oder 6,
**dadurch gekennzeichnet, dass**
das zweite Element (9) ein Kontaktelement (11) oder ein Positionierelement (15) ist.

8. Fahrpedalmodul (1) gemäß einem oder mehreren der Ansprüche 5 bis 7,
**dadurch gekennzeichnet, dass**
der Lagerbock (2) und/oder ein Pedalarm (4) des Pedalelements (3) Schnittstellen zur Aufnahme und Befestigung des ersten Elements (10) aufweisen.

9. Fahrpedalmodul (1) gemäß einem oder mehreren der Ansprüche 4 bis 8,
**dadurch gekennzeichnet, dass**
das Zusatzmodul (30) mit einem an dem Pedalelement (3) angeordneten Anschlag (35) in Eingriff bringbar ist.

10. Fahrpedalmodul gemäß Anspruch 8 oder 9,
**dadurch gekennzeichnet, dass**
an dem Pedalarm ein Anschlag (18) vorgesehen ist.
